Europäisches Patentamt

European Patent Office

Office européen des brevets

(11) Veröffentlichungsnummer: **0 150 833**
**A2**

(12) **EUROPÄISCHE PATENTANMELDUNG**

(21) Anmeldenummer: 85100787.2

(22) Anmeldetag: 25.01.85

(51) Int. Cl.⁴: **A 01 C 15/04**

(30) Priorität: 02.02.84 DE 3403540

(43) Veröffentlichungstag der Anmeldung: 07.08.85
Patentblatt 85/32

(84) Benannte Vertragsstaaten: **AT BE CH DE FR GB IT LI LU NL SE**

(71) Anmelder: **Amazonen-Werke H. Dreyer GmbH & Co. KG, D-4507 Hasbergen-Gaste (DE)**

(72) Erfinder: **Dreyer, Heinz, Dr. Dipl.-Ing., Am Amazonenwerk 7, D-4507 Hasbergen/Gaste (DE)**
Erfinder: **Scheufler, Dr.-Ing., Am Amazonenwerk 101, D-4507 Hasbergen/Gaste (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **Maschine zum dosierten Ausbringen von körnigem Material.**

㉗ Maschine zum dosierten Ausbringen von körnigem Material mit zumindest einem für mehrfache Feldüberfahrt Material aufnehmenden Vorratsbehälter, von dem aus das auszubringende Material ohne Unterbrechung Dosierorganen zugeführt wird, und zumindest einem maschinenfesten Gebläse mit einer Saugluftseite. Um für die Entleerung sämtlicher Vorratsbehälter der Maschine nach Beendigung des Materialausbringens bzw. wenn die auszubringende Materialsorte gewechselt werden soll, eine einfache Vorrichtung mit einer zentralen und bequem zu entleerenden Sammelstelle für die in dem Vorratsbehälter der Maschine verbliebene Restmenge zu schaffen, ist an der Saugluftseite des Gebläses (6) zumindest eine Leitung (18) angeschlossen, die als Entleerungsleitung (16) während des Entleerungsvorgangs sämtlicher Vorratsbehälter (1) jeweils in den unteren Bereich der jeweiligen Vorratsbehälter (1, 26) mündet, wobei in dieser Entleerungsleitung (16) zwischen der Saugluftseite des Gebläses (6) und den unteren Bereichen der jeweiligen Vorratsbehälter (1) ein Materialabscheider (17) angeordnet ist.

ACTORUM AG

## Beschreibung

## Maschine zum dosierten Ausbringen von körnigem Material

Die Erfindung betrifft eine Maschine zum dosierten Ausbringen von körnigem Material gemäß des Oberbegriffes des Anspruches 1.

Durch die DE-PS 26 09 686 ist bereits eine derartige Maschine bekannt, die sich in der Praxis sehr bewährt hat. Sehr aufwendig ist bei dieser Maschine jedoch die Entleerung des Vorratsbehälters von Restmengen. Hierzu muß man zunächst in mühevoller Arbeit mit einer Schaufel die im Vorratsbehälter verbliebene Restmenge in einen Aufbewahrungsbehälter, wie beispielsweise Säcke, umgeladen werden. Anschließend ist die nicht mit einer Schaufel auszuladene Restmenge dann über die Dosierorgane aus dem Vorratsbehälter zu entleeren, wobei diese Materialmenge aufgefangen werden muß. Diese Entleerung ist mühevoll und sehr zeitaufwendig.

Durch die landwirtschaftliche Fachzeitschrift "dlz 1/84", Seite 97 ist nun ein Absauggerät für Saatgut bei Einzelkorndrillgeräten bekannt geworden. Dieses Absauggerät besteht aus einer im Handel erhältlichen Ölkanne und einem Autostaubsauger. Der Autostaubsauger ist mit Hilfe eines Simmerringes und einer Schelle luftdicht in die Einfüllöffnung der Ölkanne montiert. Der Ausgießer der Ölkanne ist mit einem Schlauch verlängert und so zu einem beweglichen Saugrüssel umfunktioniert. Bei eingeschaltetem Staubsaugermotor zieht der Staubsauger die Luft durch den Saugschlauch und damit das Restsaatgut aus den Saugtrichtern an, wenn der Saugrüssel in die Vorratsbehälter gehalten wird. So wird die Restsaatgutmenge in der Ölkanne gesammelt.

Nachteilig ist bei dieser Vorrichtung, daß zusätzlich zu den an den Einzelkorndrillen, die bereits mit einem Gebläse ausgerüstet sind, für die Entleerung der Vorratsbehälter von Restmengen für die Entleerungsvorrichtung ein weiteres Gebläse vorhanden sein muß. Außerdem ist die Saugleistung eines Autostaubsaugers vollkommen unbefriedigend, vor allem, wenn größere Restmengen aus dem Vorratsbehälter herausgesaugt werden müssen.

Der Erfindung liegt die Aufgabe zugrunde, für die Entleerung sämtlicher Vorratsbehälter der Maschine nach Beendigung des Materialausbringens bzw. wenn die auszubringende Materialsorte gewechselt werden soll, eine einfache Vorrichtung mit einer zentralen und bequem zu entleerenden Sammelstelle für die in den Vorratsbehälter der Maschine verbliebenen Restmengen zu schaffen.

Diese Aufgabe wird erfindungsgemäß durch das Kennzeichen des Anspruches 1 gelöst.

Infolge dieser Maßnahme wird der starke Saugluftstrom des maschinenfesten Gebläses zur Entleerung der Vorratsbehälter von Restmengen ausgenutzt und die Restmenge wird in einem leicht zugänglichen und leicht zu entleerenden Materialabscheider aufgefangen. Durch den starken Saugluftstrom werden die Vorratsbehälter in kürzester Zeit gründlich geleert; d.h. auch die sich in schlecht zugänglichen Stellen der Vorratsbehälter befindlichen Restmengen werden sicher abgesaugt.

In einer bevorzugten Ausführungsform sind in dem unteren Bereich des jeweiligen Vorratsbehälters in dem Bereich der jeweiligen Dosierorgane die jeweiligen Entleerungsleitungen angeordnet. Hierdurch können die Restmengen auf einfache Weise direkt aus den unteren Bereich der Vorratsbehälter abgesaugt werden und die Entleerungsleitungen können direkt bis in die Vorratsbehälter ragen.

Um ein besonders gutes Absaugen der Restmengen zu gewährleisten, ist erfindungsgemäß vorgesehen, daß in dem unteren Bereich des jeweiligen Vorratsbehälters trichterförmige Saugstutzen angeordnet sind, daß an diese Saugstutzen die jeweiligen Entleerungsleitungen angeschlossen sind.

Damit das Material nicht während des Ausbringvorganges aus dem Vorratsbehälter abgesaugt wird, ist vor den Mündungen der Entleerungsleitungen in dem unteren Bereich des jeweiligen Vorratsbehälters ein Verschließorgan angeordnet. Erst wenn die Restmenge abgesaugt werden soll, wird das Verschließorgan in eine Stellung gebracht, in der die Restmenge abgesaugt werden kann.

Bei einer Maschine, die als pneumatisches Einzelkorndrillgerät ausgebildet ist, bei dem die Vereinzelung der Materialkörner mittels einer über eine Saugluftleitung von dem Gebläse während des Ausbringvorganges mit Saugluft beaufschlagten Vereinzelungsscheibe erfolgt, ist erfindungsgemäß vorgesehen, daß auf der Vorratsseite der Vereinzelungsscheibe in dem unteren Bereich des Vorratsraumes des jeweiligen Vorratsbehälters eine Entlerungsleitung mündet, daß die Entleerungsleitung mit der Saugluftseite des Gebläses verbunden ist, und daß diese Entleerungsleitung mittels einer Umstelleinrichtung mit Saugluft zu beaufschlagen ist. Hierdurch wird auf einfachste Weise eine bequeme Entleerung der einzelnen Vorratsbehälter erreicht, wobei die Restmengen in einem zentralen Materialabscheider gesammelt werden.

Damit keine Schläuche umgesteckt werden müssen, sieht die Erfindung vor, daß in der Saugluftleitung eine Umstelleinrichtung angeordnet ist, und daß die Entleerungsleitung mit der Umstelleinrichtung verbunden ist.

Eine besonders sichere Entleerung des gesamten Vorratsraumes der einzelnen Vorratsbehälter der Einzelkorndrillgeräte von sämtlichen Materialkörnern wird erfindungsgemäß dadurch erreicht, daß in dem unteren Bereich des jeweiligen Vorratsbehälters in der Nähe der Dosierorgane eine Entleerungsleitung mündet.

Durch die landtechnische Zeitschrift "dlz 9/82" Seiten 1246 und 1247 wird eine Einzelkornsämaschine mit einer Absaugeinrichtung beschrieben. Diese Einzelkornsämaschine weist einen zentralen Vorratsbehälter auf, von dem aus über ein Magazin den einzelnen Sägeräten das auszubringende Saatgut portionsweise zugeführt wird. Am Ende des Feldes oder der Parzelle muß der Sävorgang unterbrochen werden, dazu muß die Sagluft umgeschaltet werden. Dadurch entsteht an der Rückseie der Scheiben wie beim Sävorgang an der Vorderseite der Scheiben ein Vakuum: Das Säelement wird von allen überzähligen Körnern entleert. Dieses Entleeren ist bei dieser Maschine erforderlich, damit sich die Körner nicht in den Zuführungsschläuchen von dem Magazin zu den Sägeräten stauen können, damit immer ein ungehinderter und störungsfreier Zufluß der Saatkörner zu der Vereinzelungsscheibe gegeben ist.

Die Erfindung wird im folgenden anhand von Ausführungsbeispielen näher erläutert. Hierbei zeigen:

Fig.1    einen erfindungsgemäß ausgerüsteten pneumatischen Düngerstreuer in Prinzipdarstellung in der Ansicht von hinten,

Fig.2 ein erfindungsgemäß ausgerüstetes pneumatisches Einzelkorndrillgerät in der Seitenansicht,

Fig.3 das Einzelkorndrillgerät in Teilansicht und vergrößertem Maßstab in der Seitenansicht,

Fig.4 das Einzelkorndrillgerät im Schnitt IV-IV;

Fig.5 das Einzelkorndrillgerät mit abgenommenem Deckel in der Seitenansicht,

Fig.6    das Einzelkorndrillgerät in der der Fig.5 abgewandten
         Ansicht,

Fig.7    den erfindungsgemäßen Materialabscheider gemäß Fig. 2
         in Prinzipdarstellung und in Seitenansicht,

Fig.8    den Materialabscheider gemäß Fig.7 in der Draufsicht,

Fig.9    eine weitere erfindungsgemäße Ausführung des Einzelkorndrillgerätes nach Fig.2 in der der Fig.2 abgewandten Ansicht und

Fig.10   noch eine weitere Ausgestaltung des Einzelkorndrillgerätes
         nach Fig. 2 in der Seitenansicht.

Die als pneumatischer Düngerstreuer ausgebildete Maschine ist mit
einem zentralen Vorratsbehälter 1 ausgestattet, dessen unterer Bereich
durch einen dachförmigen Mittelteil 2 in zwei Abschnitte unterteilt
ist. Unter dem Vorratsbehälter 1 befinden sich auf beiden Seiten
Rohrleitungen 3, die an einem Luftkanal 4 angeschlossen sind, in dem
die Druckleitung 5 des von der Zapfwelle des Schleppers angetriebenen
Gebläses 6 mündet. Die Rohrleitungen 3 überragen den Vorratsbehälter
1quer zur Arbeitsrichtung teilweise erheblich und sie sind an ihren
äußeren nach hinten weisenden und quer zur Arbeitsrichtung in gleichmäßigen Abständen zueinander angeordneten Enden mit der Ausströmöffnung 7 ausgestattet.

Das im Vorratsbehälter 1 befindliche Material, welches bei vollem
Vorratsbehälter für mehrere Feldüberfahrten reicht, gelangt durch die mit
Hilfe der Schieber 8 verschließbaren Auslauföffnungen 9 zur Dosiervorrichtung 10, deren als Nockenräder ausgebildete Dosierorgane 11 es über
die Einlauftrichter 12 den Rohrleitungen 3 zuführen.

Weiterhin befinden sich noch im unteren Bereich des Vorratsbehälters 1
im Bereich der Dosierorgane 11 angebrachte Entleerungsöffnungen, die
sich über die gesamte Länge des unteren Bereiches des Vorratsbehälters 1 erstrecken. Diese Entleerungsöffnungen 13 sind mittels der als Schieber 14 ausgebildeten Verschließorgane während des Ausbringens des Materiales über die Dosierorgane 11 und die Rohrleitungen 3 zu verschliessen. Vor den Entleerungsöffnungen 13 sind die trichterförmigen Saugstutzen 15 angebracht, die über die als Schläuche ausgebildeten Entleerungsleitungen 16 mit dem an dem Vorratsbehälter 1 angebrachten Materialabscheider 17, der als Zyklon ausgebildet ist, verbunden sind. An die Oberseite des Zyklon 17 ist die Saugleitung 18 angeschlossen, die mit Hilfe eines Schnellverschlusses an die Saugluftseite des Gebläses 6 anzuschließen ist.

Der Entleerungsvorgang des Vorratsbehälters 1 dieses Düngerstreuers von Restmengen läßt sich folgendermaßen beschreiben:

Nach Abschluß des Ausbringens des Materiales auf dem Feld befindet sich noch die Restmenge 18 in dem unteren Bereich des Vorratsbehälters 1. Um den Vorratsbehälter 1 nun von dieser Restmenge zu entleeren, werden zunächst die Schieber 14 nach oben gezogen, so daß die Saugstutzen 15 freien Zugang zu den Entleerungsöffnungen 13 haben. Anschließend wird die Saugleitung 18 mit Hilfe des Schnellverschlusses an die Saugluftseite des Gebläses 6 angeschlossen. Nachdem der Antrieb der Dosierorgane 11 unterbrochen ist, wird über die Zapfwelle des Schleppers das Gebläse 6 angetrieben, so daß über den als Materialabscheider ausgebildeten Zyklon 17 die in den unteren Bereich des Vorratsbehälters 1 mündenden Saugstutzen 15 mit Unterdruck beaufschlagt werden. Durch den Unterdruck wird die gesamte Saatmenge 19 über die Saugstutzen 15 und die Entleerungsleitungen 13 in den Zyklon 17 gesogen, so daß die Restmenge sich in dem unteren Bereich des Zyklon 17 sammelt. Nach dem Absaugen der gesamten Restmenge 19 wird das Gebläse 6 abgeschaltet. Jetzt wird der als Sack 20 ausgebildete Auffangbehälter an dem Zyklon 17 mittels eines Schnellverschlusses angebracht. Anschließend wird der Schieber 21 betätigt, so daß die in dem Zyklon 17 aufgefangene Restmenge 19 durch die von dem Schieber 21 freigegebene Öffnung in den Sack 20 fallen kann. Nachdem die Restmenge 19 sich in dem Sack 20 befindet, wird der Schieber 21 wieder in die eingezeichnete Stellung geschoben und der Sack 20 wird von dem Zyklon abgenommen.

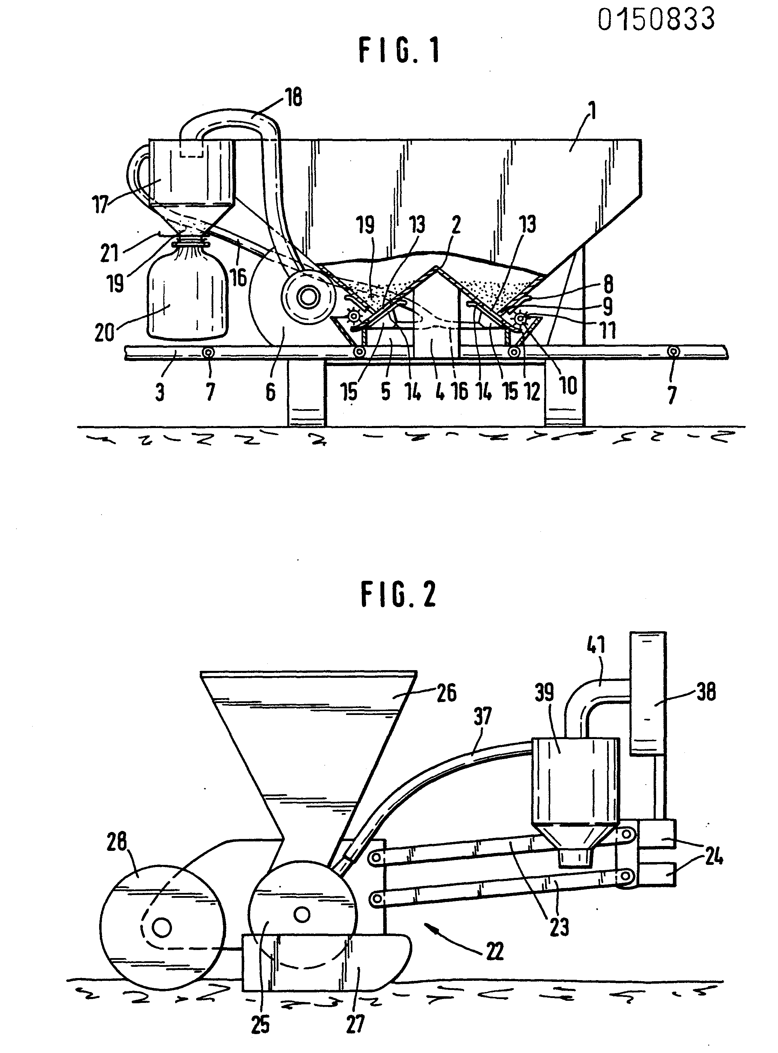

Das in den Fig.2 bis 7 dargestellte Einzelkorndrillgerät 22 ist über Parallelogrammlenker 23 an einem Zentralrahmen 24 angelenkt, der in bekannter und daher nicht dargestellter Weise an einem Schlepper angekuppelt ist. Das Einzelkorndrillgerät 22 weist den Vereinzelungsmechanismus 25 mit dem angeflanschten Vorratsbehälter 26 und die hinter dem Säschar 27 des Einzelkorndrillgerätes 22 angeordnete Druckrolle 28 auf.

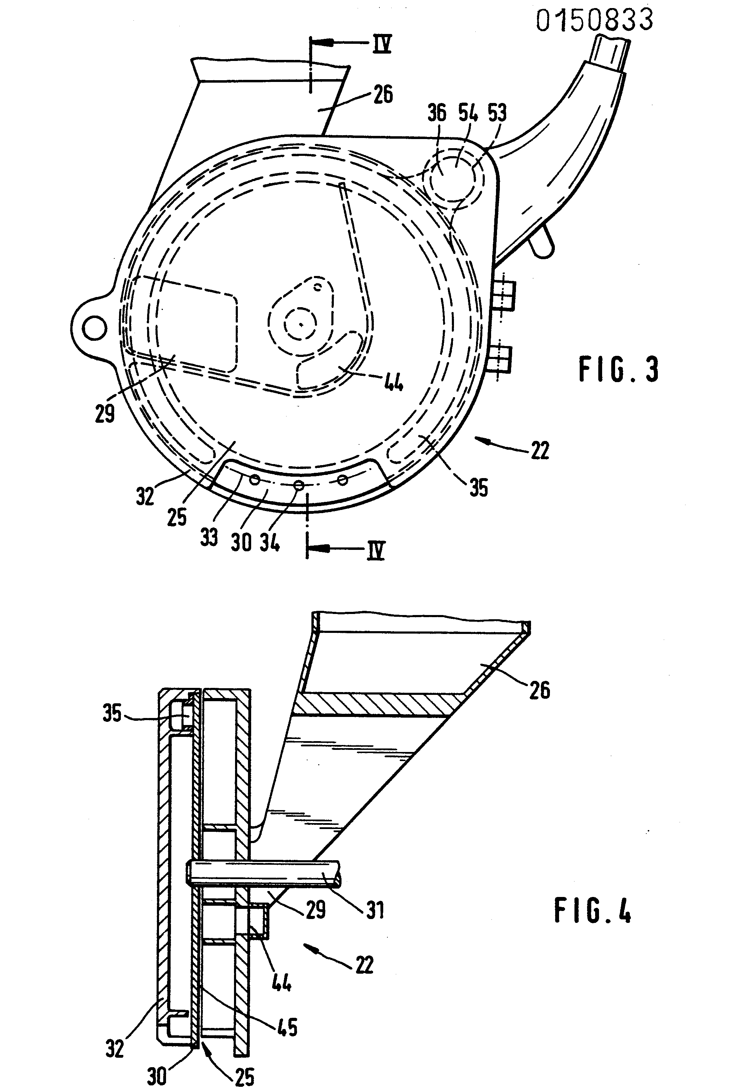

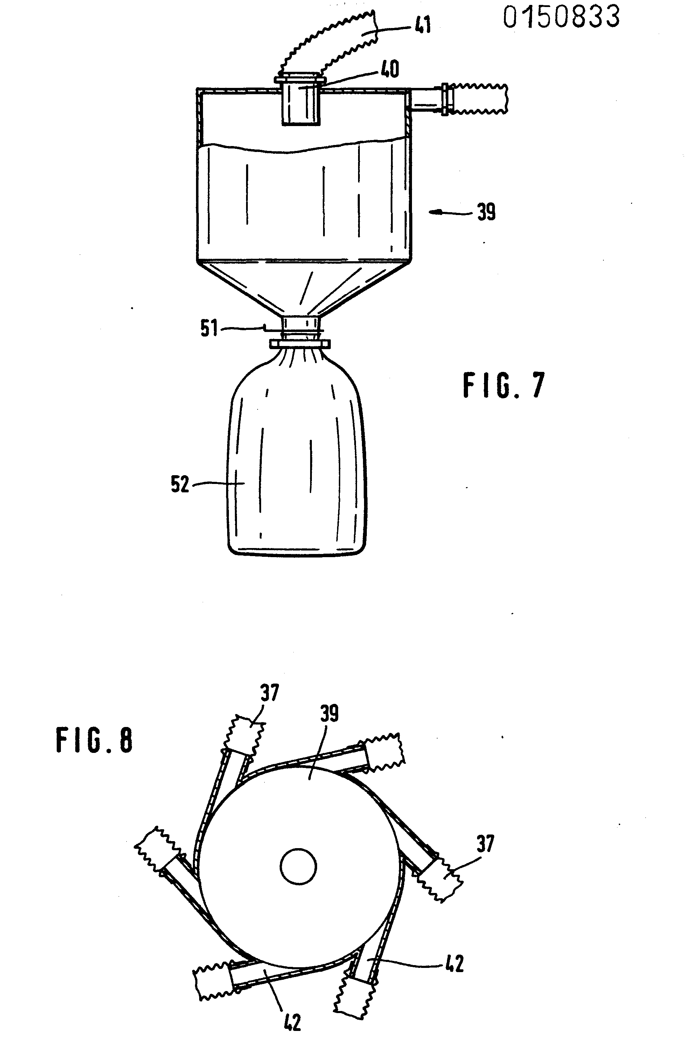

Das in dem Vorratsbehälter befindliche Saatgut, welches bei vollem Vorratsbehälter 26 für mehrere Feldüberfahrten reicht, gelangt über den zu dem Vorratsbehälter 26 gehörenden Kanal 29 zu der Vereinzelungsscheibe 30, die auf der Welle 31 angeordnet ist. Die Welle 31 wird in bekannter Weise angetrieben, so daß die Vereinzelungsscheibe 30 sich während des Ausbringens des Saatgutes dreht. Auf der anderen Seite der Vereinzelungsscheibe 30 ist der Deckel 32 des Vereinzelungsmechanismus 25 angebracht, der auf seiner der Vereinzelungsscheibe zugewandten Seite im Bereich des Lochkreises 33, auf dem die Löcher 34 der Vereinzelungsscheibe 30 in gleichmäßigen Abständen angeordnet sind, die sog. Saugniere 35 aufweist. Der Übersichtlichkeit wegen sind in der Fig.3 auf der Vereinzelungsscheibe 30 noch einige Löcher 34 eingezeichnet. In die Saugniere 35 mündet das Loch 36. An das Rohr 36 ist die Saugluftleitung 37 angeschlossen, die mit dem von der Schlepperzapfwelle angetriebenen Gebläse 38 verbunden ist. Innerhalb dieser Saugluftleitung 37 ist der an dem Rahmen 24 des Einzelkorndrillgerätes 22 befestigte, als Zyklon ausgebildete Materialabscheider 39 angebracht. Der Zyklon 39 weist auf seiner Oberseite den zentralen Sauganschluß 40 auf, an dem der zu der Saugluftseite des Gebläses 38 führende Spiralschlauch 41 angeschlossen ist. In den oberen Mantelumfang des Zyklon 39 münden die ebenfalls als Spiralschläuche ausgebildeten, von den einzelnen Einzelkorndrillgeräten kommenden Saugluftleitungen 37, wobei der Zyklon eine der Anzahl der Einzelkorndrillgeräte entsprechende Anzahl von Anschlüssen 42 aufweist. Zweckmäßigerweise sind die Anschlässe 42, wie in Fig.8 dargestellt, sternförmig angeordnet.

0150833

Das Rohr 36 weist die Umstelleinrichtung 43 mit der von der Saugluftleitung 37 abzweigenden Entleerungsleitung 44 auf. Die Entleerungsleitung 44 mündet auf der Vorratsseite 45 der Vereinzelungsscheibe 30 in dem unteren Bereich des Vorratsbehälters 26. Die Umstelleinrichtung 34 weist die Umstellklappe 46 auf, die auf der in dem Rohr 36 gelagerten Kippwelle 47 befestigt ist. Auf dem aus dem Rohr 36 ragenden Ende der Kippwelle 47 ist der doppelseitige Kipphebel 48 angebracht. An dem Ende des Kipphebels 45 ist die Zugfeder 49 angeordnet, die die Umstellklappe 46 immer in der Position hält, in die die Saugluftleitung 37 mit der Saugniere 35 in Saugverbindung steht.

Die Entleerung der Vorratsbehälter der Einzelkorndrillgeräte geht folgendermaßen vor sich:

Nachdem das Ausbringen der vereinzelten Saatkörner, welche in bekannter Weise auf pneumatische Art durch die mit Saugluft von der Saugniere 35 her beaufschlagte Vereinzelungsscheibe 30 während des Ausbringvorganges vereinzelt werden, abgeschlossen ist bzw. wenn eine andere Saatgutsorte ausgebracht werden soll, müssen die Vorratsbehälter 26 der Einzelkorndrillgeräte 22 entleert werden.

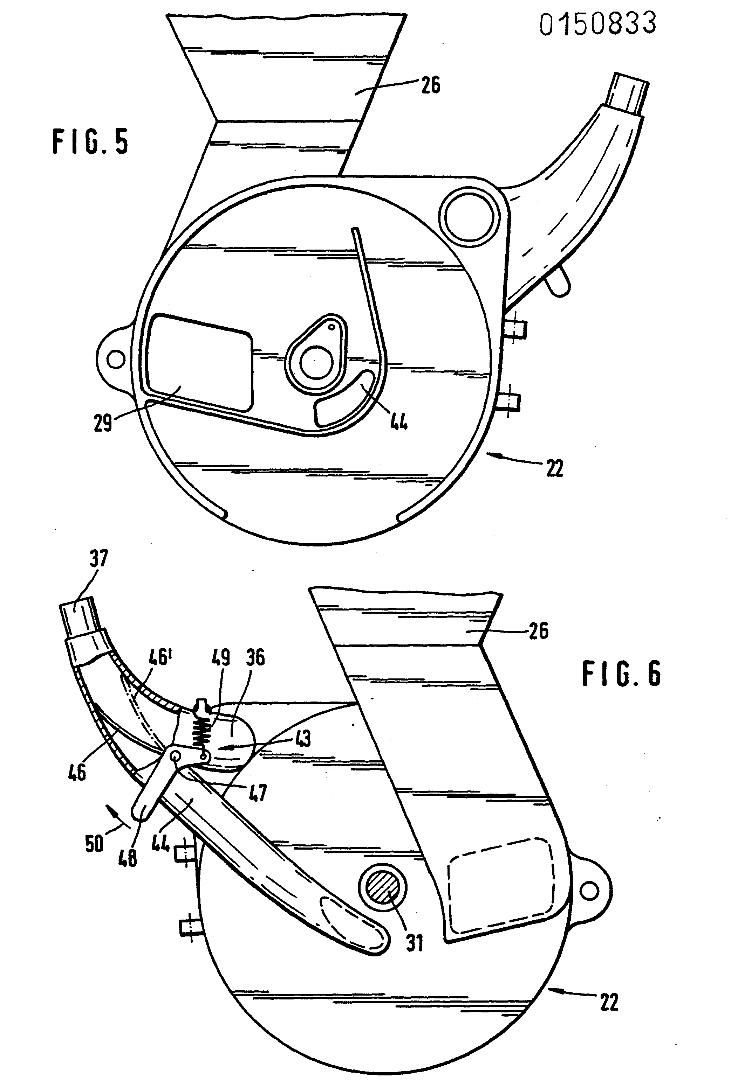

Hierzu wird zunächst das Gebläse 38 weiterhin von der Schlepperzapfwelle angetrieben, um einen Saugluftstrom zu erzeugen, so daß die Saugluftleitungen 37 und der Zyklon 39 mit Vakuum beaufschlagt werden. Für die Entleerung der einzelnen Vorratsbehälter 26 der einzelnen Einzelkorndrillgeräte 22 wird die Umstellklappe 46 in die in Fig.6 mit unterbrochenen Linien eingezeichnete Stellung 46' gebracht, in dem mittels Handkraft der Kipphebel 48 in Pfeilrichtung 50 gedrückt wird. Die Luft wird somit durch die Entleerungsleitung 44, die in dem unteren Bereich des Vorratsbehälters 26 mündet, angesaugt. Die sich im Vorratsbehälter 26 befindliche Restmenge Saatgut bzw. die an der Vereinzelungsscheibe 30 anliegenden Saatkörner werden nun von dem Luftstrom durch diese von der Entleerungsleitung 44 gebildeten Absaugöffnung mitgerissen und durch die Entleerungsleitung 44 und die Saugluftleitung 37 pneumatisch zu dem Materialabscheider 39 gefördert. In dem konstruktiv wie ein Zyklon ausgebildeten Materialabscheider 39 wird das Saatgut von dem fördernden Luftstrom getrennt.

Ü150833

Das Saatgut sammelt sich in dem unteren Bereich des Materialabscheiders 39; der Luftstrom geht weiter zu dem Gebläse 38. Wenn der Vorratsbehälter 26 von dem restlichen Saatgut auf diese Weise geleert worden ist, wird der Kipphebel 48 losgelassen und durch die Zugfeder 49 wird die Umstellklappe 46 wieder in ihre ursprüngliche Position zurückgezogen, so daß das Einzelkorndrillgerät 22 wieder betriebsbereit ist. Es wird hierdurch vermieden, daß der für den Arbeitsgang gefüllte Vorratsbehälter 26 ungewollt entleert wird.

Auf diese vorbeschriebene Weise werden alle Vorratsbehälter 26 an der dem Rahmen 24 angeordneten Einzelkorndrillgeräte nach und nach entleert. Wenn alle Vorratsbehälter entleert sind, wird das Gebläse abgestellt und durch Öffnen der Auslaufklappe 51 in dem unteren Teil des Materialabscheiders 39 wird das Saatgut in einem an dem Materialabscheider 39 angeklemmten Sack 52 entleert. Nach dem Entleerungsvorgang wird die Auslaufklappe 51 wieder geschlossen.

Die Saugluftleitung 37 übernimmt bei dem erfindungsgemäßen Einzelkorndrillgerät zwei verschiedene Funktionen:

a) Ansaugen des Saatgutes an die Vereinzelungsscheibe während des Sävorganges und

b) Förderleitung bzw. Entleerungsleitung während des Entleerungsvorganges für das im Vorratsbehälter verbliebene restliche Saatgut.

Da die Saugluftleitung 37 an dem Einzelkorndrillgerät über die Umstelleinrichtung 43 in die Entleerungsleitung 44 verzweigt wird, muß der Luftstrom von der Verzweigungsstelle in der Umstelleinrichtung 43 in den abklappbaren Deckel 32 des Einzelkorndrillgerätes 22 zur Rückseite der Vereinzelungsscheibe 30 geführt werden. Dazu ist der Deckel 32 und das Gehäuse des Einzelkorndrillgerätes 22 mit entsprechenden Luftkanälen 53 und 54 ausgebildet, die an der Übergangsstelle mittels O-Ringe abgedichtet sind.

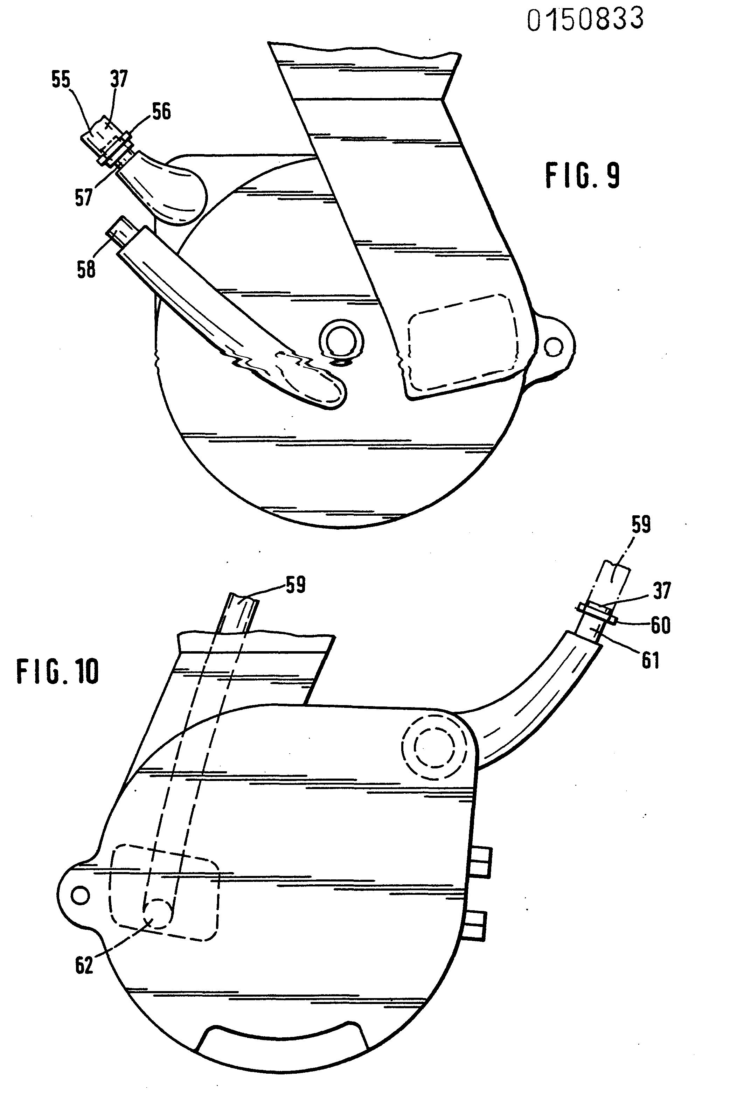

Das Einzelkorndrillgerät nach Fig.9 unterscheidet sich von dem Einzelkorndrillgerät nach Fig.3 dadurch, daß dieses Einzelkorndrillgerät keine Umstelleinrichtung 43 aufweist. Der als Saugluftleitung 37 ausgebildete Schlauch 55 ist mit dem Schnellverschluß 56 auf dem Rohrstutzen 57 befestigt. Um nun den Vorratsbehälter 26 entleeren zu können, muß zum Entleeren des Vorratsbehälters 26 der Schlauch 55 von dem Rohrstutzen 57 mittels des Schnellverschlusses 56 gelöst werden und anschließend an den Rohrstutzen 58 der Entleerungsleitung 44 angebracht werden. Durch Einschalten des Gebläses wird das restliche Saatgut aus dem Vorratsbehälter in vorbeschriebener Weise abgesaugt. Bei dieser Ausführungsform übernimmt der Schnellverschluß 56 die Funktion der Umstelleinrichtung.

Das Einzelkorndrillgerät gemäß Fig.10 weist im Gegensatz zu dem Einzelkorndrillgerät gemäß Fig.3 keine Entleerungsleitung auf. Um nun auch bei derartigen Einzelkornsägeräten ohne Entleerungsleitung den Vorratsbehälter von Restmengen entleeren zu können, wird der Schlauch 59 mittels des Schnellverschlusses 60 von dem Rohrstutzen 61 der Saugluftleitung 37 gelöst. Anschließend wird das Schlauchende 62 entsprechend der Darstellung der Fig.10 durch den Vorratsbehälter 26 in den unteren Bereich gehalten, so daß der jetzt als Entleerungsleitung dienende Schlauch 59 in dem unteren Bereich des Vorratsbehälters mündet. Somit läßt sich auf diese Weise auch dieser Vorratsbehälter in der oben beschriebenen Weise entleeren. Nach dem Entleerungsvorgang des Vorratsbehälters wird der Schlauch 59 mittels des Schnellverschlusses 60 wieder an den Rohrstutzen angeschlossen. Auch bei dieser Ausführungsvariante übernimmt der Schnellverschluß 60 die Funktion der Umstelleinrichtung.

GRÜNECKER, KINKELDEY, STOCKMAIR & PARTNER

PATENTANWÄLTE
EUROPEAN PATENT ATTORNEYS

A GRUNECKER DIPL ING
DR H KINKELDEY DIPL ING
DR W STOCKMAIR DIPL ING AE E ICALTECH
DR K SCHUMANN DIPL PHYS
P H JAKOB DIPL ING
DR G BEZOLD DIPL CHEM
W MEISTER DIPL ING
H HILGERS DIPL ING
DR H MEYER-PLATH DIPL ING
DR M BOTT-BODENHAUSEN DIPL PHYS
DR U KINKELDEY DIPL BIOL

*LICENCIE EN DROIT DE L UNIV DE GENEVE

8000 MÜNCHEN 22
MAXIMILIANSTRASSE 58

Amazonen-Werke
H.Dreyer GmbH & Co.KG

4507 Hasbergen/Gaste

EP 2174 - Sch.

## Maschine zum dosierten Ausbringen von körnigem Material

Patentansprüche

1. Maschine zum dosierten Ausbringen von körnigem Material mit zumindest einem für mehrfache Feldüberfahrt Material aufnehmenden Vorratsbehälter, von dem aus das auszubringende Material ohne Unterbrechung Dosierorganen zugeführt wird, und zumindest einem maschinenfesten Gebläse mit einer Saugluftseite, d a d u r c h g e k e n n z e i c h n e t , daß an der Saugluftseite des Gebläses (6,38) zumindest eine Leitung (18, 37) angeschlossen ist, die als Entleerungsleitung (16, 37, 44, 55, 59) während des Entleerungsvorgangs sämtlicher Vorratsbehälter (1, 26) jeweils in den unteren Bereich der jeweiligen Vorratsbehälter (1,26) mündet, und daß in dieser Entleerungsleitung (16,37,55,59) zwischen der Saugluftseite des Gebläses (6, 38) und den unteren Bereichen der jeweiligen Vorratsbehälter (1, 26) ein Materialabschneider (17, 39) angeordnet ist.

2. Maschine nach Anspruch 1, d a d u r c h     g e k e n n - z e i c h n e t , daß in dem unteren Bereich des jeweiligen Vorratsbehälters (1, 26) in dem Bereich der jeweiligen Dosierorgane (11,30) die jeweiligen Entleerungsleitungen (16,37,44,55,59) angeordnet sind.

3. Maschine nach Anspruch 2, d a d u r c h     g e k e n n - z e i c h n e t , daß in dem unteren Bereich des jeweiligen Vorratsbehälters (1) trichterförmige Saugstutzen (15) angeordnet sind, daß an diese Saugstutzen (15) die jeweiligen Entleerungsleitungen (16) angeschlossen sind.

4. Maschine nach Anspruch 1, d a d u r c h     g e k e n n - z e i c h n e t , daß vor den Mündungen der Entleerungsleitungen (16) in dem unteren Bereich des jeweiligen Vorratsbehälters (1) ein Schließorgan (14) angeordnet ist.

5. Maschine, insbesondere nach Anspruch 1, wobei die Maschine als pneumatisches Einzelkorndrillgerät ausgebildet ist, bei dem die Vereinzelung der Materialkörner mittels einer über eine Saugluftleitung von dem Gebläse während des Ausbringvorganges mit Saugluft beaufschlagten Vereinzelungsscheibe erfolgt, d a - d u r c h     g e k e n n z e i c h n e t , daß auf der Vorratsseite (45) der Vereinzelungsscheibe (30) in dem unteren Bereich des Vorratsraumes des jeweiligen Vorratsbehälters (26) eine Entleerungsleitung (37, 44, 58, 59) mündet, daß diese Entleerungsleitung (37, 44, 58, 59) mit der Saugluftseite des Gebläses (38) verbunden ist, und daß diese Entleerungsleitung (37,44,58,59) mittels einer Umstelleinrichtung mit Saugluft zu beaufschlagen ist.

6. Maschine nach Anspruch 5, d a d u r c h   g e k e n n - z e i c h n e t , daß in der Sagluftleitung (37) eine Umstellein-richtung (43) angeordnet ist, und daß die Entleerungsleitung (44) mit der Umstelleinrichtung (43) verbunden ist.

7. Maschine nach Anspruch 5, d a d u r ch   g e k e n n - z e i c h n e t , daß in der Entleerungsleitung (37) ein Materialabscheider (39) angeordnet ist.

8. Maschine nach Anspruch 5, d a d u r c h   g e k e n n - z e i c h n e t , daß in der Sagluftleitung (37) ein Materialab-scheider (39) angeordnet ist.

9. Maschine, insbesondere nach Anspruch 1, wobei die Maschine als pneumatisches Einzelkorndrillgerät ausgebildet ist, d a d u r c h   g e k e n n z e i c h n e t   , daß in dem unteren Bereich des jeweiligen Vorratsbehälters (26) in der Nähe des Dosierorgans (30) eine Entleerungsleitung (37,44,58,59) mündet.

10. Maschine nach Anspruch 5, d a d u r c h   g e k e n n - z e i c h n e t , daß die Umstelleinrichtung als in der Sagluftlei-tung (37) angeordneter Schnellverschluß ausgebildet ist.

11. Maschine nach Anspruch 5, d a d u r c h   g e k e n n - z e i c h n e t , daß die Umstelleinrichtung (43) eine Verzweigung in eine Sagluftleitung (37) und in eine Entleerungsleitung (44) aufweist, daß in der Umstelleinrichtung (43) eine Umstellklappe (46) angeordnet ist, die mittels eines Kipphebels (48) umzustellen ist, und daß eine Zugfeder (49) die Umstellklappe (46) in der Vereinzelungssaugstellung (46) hält.

0150833

# FIG. 1

# FIG. 2

Amazonen – Werke H.Dreyer GmbH&

0150833

**FIG.3**

**FIG.4**

Amazonen - Werke H. Dreyer GmbH & Co

0150833

FIG. 5

26

29

44

22

FIG. 6

37

26

46'

49

36

43

46

47

50

48

44

31

22

Amazonen - Werke H. Dreyer GmbH & Co KG

0150833

41

40

39

51

52

**FIG. 7**

**FIG. 8**

37

39

37

42

42

42

Amazonen - Werke  H. Dreyer  GmbH & Co I

0150833

FIG. 9

FIG. 10

Amazonen - Werke H. Dreyer GmbH &